# EUROPÄISCHE PATENTSCHRIFT

(11) **EP 2 880 962 B1**
(45) Veröffentlichungstag und Bekanntmachung des Hinweises auf die Patenterteilung: **27.04.2016**
(21) Anmeldenummer: 13727132.6
(22) Anmeldetag: 03.06.2013
(51) Int. Cl.: H05B 3/00, H05B 3/12, H05B 3/82, F01N 3/20, H05B 3/78, H05B 3/24, H05B 3/04

(54) **AUFHEIZEINRICHTUNG FÜR EINEN BETRIEBS-/HILFSSTOFF MIT AUSGLEICHSELEMENT**
HEATING EQUIPMENT FOR AN OPERATING SUBSTANCE OR ADJUVANT WITH COMPENSATION ELEMENT
DISPOSITIF DE CHAUFFAGE D'UNE SUBSTANCE DE TRAVAIL OU D'UN ADJUVANT AVEC ÉLÉMENT DE COMPENSATION

(30) Priorität: 31.07.2012 DE 102012213417
(43) Veröffentlichungstag der Anmeldung: 10.06.2015
(73) Patentinhaber: Robert Bosch GmbH, 70442 Stuttgart (DE)
(72) Erfinder: LANDES, Ewgenij, 71686 Remseck (DE); SEMET, Jan, 73553 Alfdorf-Vordersteinenberg (DE); ZALIUKAS, Romualdas, 73635 Rudersberg (DE); SCHOTT, Steffen, 71701 Schwieberdingen (DE)
(86) Internationale Anmeldenummer: PCT/EP2013/061388
(87) Internationale Veröffentlichungsnummer: WO 2014/019741

(56) Entgegenhaltungen:
- EP-A1- 1 505 135
- EP-A1- 2 161 421
- DE-A1-102009 012 982
- US-A- 4 223 208
- US-A1- 2006 237 441
- US-A1- 2009 100 824

## Beschreibung

### Stand der Technik

DE 10 2012 204 106 betrifft einen Wärmeverteilkörper für eine Heizung eines Dosiersystems zum Einbringen eines Betriebs-/Hilfsstoffes, insbesondere eines Reduktionsmittels, in den Abgastrakt einer selbstzündenden Verbrennungskraftmaschine. Der Wärmeverteilkörper umfasst einen Wärmeleitkörper sowie eine diesen ummantelnde Umspritzung, die aus Kunststoffmaterial gefertigt ist. Der Wärmeleitkörper weist spannungs- und/oder dehnungsvermindernde Elemente auf. Ferner wird in DE 10 2012 204 106 eine Heizung offenbart, die mindestens ein PTC-Element umfasst, welches über eine Stromschiene elektrisch kontaktiert ist.

Bei Fahrzeugen, die mit selbstzündenden Verbrennungskraftmaschinen ausgestattet sind, ist zur Erfüllung von Umweltauflagen die Einspritzung eines Betriebs-/Hilfsstoffes, so zum Beispiel Harnstoff oder einer Harnstoff-Wasser-Lösung, die unter dem Namen AdBlue® bekannt ist, erforderlich. Im Wege der selektiven katalytischen Reduktion (SCR) erfolgt eine Umwandlung der im Abgas der selbstzündenden Verbrennungskraftmaschine enthaltenden NOₓ-Verbindungen in Wasser und Stickstoff. Ein derartiges Dosiersystem zum Einbringen des Betriebs-/Hilfsstoffes in den Abgastrakt einer selbstzündenden Verbrennungskraftmaschine umfasst unter anderem eine Heizung. Dies ist dem Umstand geschuldet, dass der im Wege des SCR-Verfahrens in das Abgas eindosierte Betriebs-/Hilfsstoff, d.h. das Reduktionsmittel bei niedrigen Außentemperaturen unter-11°C gefriert, was durch das Vorsehen der Heizung verhindert wird. Die Heizung hat die Aufgabe, bei Temperaturen unter dem Harnstoff bzw. dem HWL-Gefrierpunkt dieses Medium flüssig zu halten, bzw. eventuell bereits innerhalb des Systems gefrorenen Betriebs-/Hilfsstoff, d.h. das eingesetzte Reduktionsmittel wieder aufzutauen, so dass eine Entnahme des Betriebs-/Hilfsstoffes aus einem Tank wieder möglich ist.

In der Regel umfassen derartige Heizvorrichtungen einen Wärmeverteilkörper, der im Allgemeinen aus einem gut wärmeleitenden Werkstoff, wie beispielsweise Aluminium gefertigt wird. Als Wärmeerzeuger wird bei derartigen Aufheizvorrichtungen mindestens ein PTC-Element eingesetzt. Ferner werden aus keramischem Material gefertigte Isolationsscheiben, masseseitige Stromschienen sowie elektrische Kontaktleisten eingesetzt, die mit einer aus Kunststoffmaterial gefertigten Vorumspritzung ausgestattet sein können.

Um eine dauerhafte thermische Verbindung zwischen dem mindestens einen PTC-Element und dem eingesetzten Wärmeleitkörper sowie eine dauerhafte elektrische Kontaktierung sicherzustellen, werden das mindestens eine PTC-Element, die potentialseitige Stromschiene und mindestens eine Isolierscheibe bzw. Isolierplatte in einer innerhalb des Wärmeleitkörpers ausgebildeten Tasche miteinander verpresst bzw. miteinander verstemmt. Bereits bei einem derartigen Montagevorgang, d.h. bei der Verpressung bzw. bei der Verstemmung kann es zu Rissbildungen an dem aus keramischen Material gefertigten Isolationselement bzw. an dem mindestens einen PTC-Element kommen, wodurch eine Verschlechterung der Heizleistung eintreten kann.

Aufgrund der Rissbildung bzw. des sich einstellenden Risswachstums und der nachlassenden Spannkraft verschlechtert sich die Wärmeleitung von dem mindestens einen PTC-Element zum Wärmeleitkörper. Da einzelne Bruchstücke ggf. keinen Kontakt mehr zum Wärmeleitkörper oder benachbarten Bruchstücken haben, ist zusätzlich zur Wärmeleitung auch eine elektrische Kontaktierung einzelner Bruchstücke nicht mehr sichergestellt. Die Wärmeleitung kann zusätzlich - auch ohne Brüche an PTC-Elementen oder Isolierplatte-durch Unebenheiten verschlechtert werden, da die Einzelteile aus Edelstahl, Keramik und Aluminiumlegierungen, beispielsweise im Druck- oder Strangguss gefertigt werden. So können Formtoleranzen nicht beim Verpressen durch eine Materialverformung ausgeglichen werden, wodurch kein vollflächiger Kontakt sichergestellt werden kann.
Eine Heizeinrichtung gemäß dem Oberbegriff des Anspruchs 1 ist zum Beispiel aus US2009/100824 A bekannt.

### Darstellung der Erfindung

Gemäß dem Anspruch 1 wird vorgeschlagen, in einer Heizeinrichtung für einen Betriebs-Hilfsstoff zwischen dem mindestens einen PTC-Element und einem Wärmeverteilkörper mindestens ein Ausgleichselement anzubringen, so dass Oberflächenfehler, wie beispielsweise Rauigkeit, Ebenheit und Parallelität kompensiert werden. Da sich das mindestens eine Ausgleichselement hinsichtlich seiner Oberfläche an die Oberflächen des mindestens einen PTC-Elementes und des Wärmeverteilkörpers beim Verpressen anpasst, stellt sich ein optimaler Kontakt zwischen diesen Komponenten ein. Dies bedeutet, dass idealerweise keine Spalte und/oder Lufteinschlüsse auftreten, so dass sich die Wärmeübertragung zwischen den erwähnten Komponenten erheblich verbessert und sich die durch das mindestens eine als Heizelement eingesetzte PTC-Element erzeugte Heizleistung signifikant steigern lässt. Die signifikante Steigerung der Heizleistung hat ihre Ursache darin, dass bei selbstregelnden Heizelement mit PTC-Element als Wärmequelle bei bestimmten Anwendungen die Abregeltemperatur mit hohem elektrischen Widerstand in der Nähe der Arbeitstemperatur mit minimalem Widerstand liegt. Bei diesen Anwendungsfällen führt eine schlechte Wärmeauskopplung auch bei kleiner Temperaturerhöhung am PTC-Element zu einer großen Widerstandserhöhung und damit wiederum zu einer geringeren Heizleistung. Durch das erfindungsgemäß vorgeschlagene Ausgleichselement wird die Heizleistungssteuerung durch bessere Kühlung am PTC-Element und einem daraus resultierenden niedrigeren elektrischen Widerstand erreicht.

In einer vorteilhaften Ausführungsvariante des mindestens einen erfindungsgemäß vorgeschlagenen Ausgleichselementes wird dieses beispielsweise als Graphitfolie oder als Graphitschicht oder aus einem anderen Werkstoff gefertigt.

Insbesondere ist das mindestens eine eingesetzte Ausgleichselement elektrisch leitfähig und weist eine gute Wärmeleitfähigkeit von > 0,5 W/mK, vorzugsweise über 5 W/mK auf. Die elektrische Leitfähigkeit des mindestens einen Ausgleichselement wird bevorzugt abhängig von der maximal auftretenden Stromstärke bestimmt.

Das mindestens eine Ausgleichselement hat eine Dicke, die vorzugsweise zwischen 0,05 mm bis 0,25 mm liegt. Abhängig von der Dicke bzw. der Konfiguration des mindestens einen eingesetzten PTC-Elementes und des Wärmeleitkörpers, sowie der Kontaktflächen, kann dieser Dickenbereich auch unter- oder überschritten werden. Dies ist applikations- und einsatzzweckabhängig. In Abhängigkeit von der Oberfläche, so z.B. deren Rauigkeit, deren Ebenheit oder der Parallelität der beiden Kontaktpartner ist eine möglichst geringe Dicke des Ausgleichselementes, insbesondere wegen einer verbesserten Wärmeleitung vorzuziehen.

Eine weitere Eigenschaft, die das mindestens eine Ausgleichselement aufweist, ist dessen flexible Verformbarkeit bei Auftreten von Drücken und/oder dessen Komprimierbarkeit. Weist das mindestens eine eingesetzte Ausgleichselement diese Eigenschaften auf, kann es sich fertigungsbedingt auftretenden Unebenheiten bzw. Toleranzen anpassen, bzw. verbliebene auf Fertigungstoleranzen zurückzuführende Spalte besser ausfüllen und schließen, so dass ein optimaler Kontakt zwischen den verbauten Komponenten erreichbar ist.

Das mindestens eine Ausgleichselement kann als diskreter Baukörper in Form einer Platte oder einer Folie vorliegen, es kann jedoch auch als Beschichtung, beispielsweise als Graphitpulverbeschichtung auf die Komponenten, bzw. zwischen die miteinander zu fügenden Komponenten zur Sicherstellung einer optimalen Wärmeübertragung im Wege einer Beschichtung aufgetragen werden. Vorzugsweise ist das mindestens eine Ausgleichselement flüssigkeits- und vorzugsweise auch gasdicht.

Bei einer entsprechenden Kammerung im Einbauraum, kann ein Rückfedervermögen zur Kompensation thermischer Dehnungen im Pressverbund eingestellt werden. Vorzugsweise wird das mindestens eine Ausgleichselement in einem abgeschlossenen, gekammerten Raum in einer für zur Aufnahme des PTC-Elements bestimmten Tasche verstemmt oder verpresst. Der abgeschlossene oder gekammerte Bauraum ist vor der Verstemmung bzw. der Verpressung etwas größer bemessen als die Abmessungen des Ausgleichselementes. Durch den Verstemmungs- bzw. Verpressungsvorgang wird der abgeschlossene bzw. gekammerte Bauraum vollständig vom Ausgleichselement ausgefüllt. Dadurch stellt sich ein allseitiger Druck auf das Ausgleichselement ein, der wiederum Voraussetzung für das Rückfederungsvermögen des Ausgleichselementes über dessen Lebensdauer ist. Ansonsten würde das Ausgleichselement über Lebensdauer kriechen und die Vorspannung bzw. Kontaktierung aufgrund von Relaxationserscheinungen nachlassen oder im Extremfall vollständig verloren gehen.

Es besteht jedoch auch die Möglichkeit, ein Ausgleichselement einzusetzen, welches eine derartige Vorspannung aufgrund der ihm innewohnenden physikalischen Eigenschaften, wie beispielsweise Formstabilität, Festigkeit und Fließverhalten nicht benötigt oder es könnten auch geringere Vorspannungen zur Sicherstellung einer optimalen Kontaktierung ausreichen, wodurch die Kammerung entfallen kann. Es besteht des Weiteren die Möglichkeit, eine partielle bzw. teilweise Kammerung des Ausgleichselementes im abgeschlossenen Bauraum vorzusehen, der abhängig vom verwendeten Werkstoff für das Ausgleichselement ist oder abhängig von dessen Toleranz sein kann.

Das erfindungsgemäß vorgeschlagene, mindestens eine Ausgleichselement kann anstelle von Graphitfolie beispielsweise durch eine Wärmeleitpaste, durch Kohlenstoff bzw. auch über Beschichtung mit Kohlenstoff-Nanopartikel dargestellt werden.

### Vorteile der Erfindung

Die erfindungsgemäß vorgeschlagene Lösung zeichnet sich dadurch aus, dass durch das mindestens eine Ausgleichselement die Wärmeübertragung von dem mindestens einen PTC-Element an den Wärmeleitkörper verbessert wird, wodurch sich das PTC-Element besonders gut kühlen lässt, so das eine erheblich verbesserte Wärmeabfuhr möglich ist, da das PTC-Element durch erhöhte Temperatur und elektrischen Widerstand nicht so schnell in den Abriegelbereich gelangt. Des Weiteren ermöglicht die erfindungsgemäß vorgeschlagene Lösung eine Verkürzung der Aufheizzeiten der erfindungsgemäß vorgeschlagenen Heizeinrichtung, so dass idealerweise in einem kürzeren Aufheizzeitraum eine größere Auftaumenge bereitgestellt werden kann. Eine weitere vorteilhafte Eigenschaft der erfindungsgemäß vorgeschlagenen Lösung ist darin zu sehen, dass ein Ausgleich von Unebenheiten bzw. rauen Oberflächen, wie sie beim Wärmeleitkörper aus einem Druckgussmaterial oder aus einem ähnlichen Material bzw. bei Rauheiten und Unebenheiten, die an dem mindestens einen PTC-Element verblieben sind, erreicht werden kann. Das erfindungsgemäß vorgeschlagene, mindestens eine flexible Ausgleichselement verhindert des Weiteren das Brechen oder Abbrechen, insbesondere von Peripheriebereichen des mindestens einen PTC-Elementes oder einer keramischen Isolierplatte bei der Montage durch Verpressen. Die Bruchgefahr wird idealerweise ausgeschlossen oder zumindest signifikant reduziert, so dass sich die Lebensdauer einer derart konfigurierten Aufheizvorrichtung erhöht und eine Ausschussreduzierung möglich ist.

Die elektrische Verbindung zwischen dem mindestens einen eingesetzten PTC-Element und dem Wärmeleitkörper wird durch Versiegelung der elektrischen Kontaktflächen aufgrund vollflächigen Kontaktes des Ausgleichelementes deutlich robuster gegenüber Umgebungsgasen oder aggressiven Kondensaten. Dadurch wiederum ist eine deutliche Erhöhung der Lebensdauer der Heizeinrichtung bzw. des gesamten Dosiersystems zum Einbringen eines Betriebs-/Hilfsstoffes in den Abgastrakt einer Verbrennungskraftmaschine erreichbar, verglichen mit aktuell eingesetzten Dosiersystemen. Des Weiteren kann durch die erfindungsgemäß vorgeschlagene Lösung ein zu hoher Übergangswiderstand (z.B. durch Kontaktalterung über Lebensdauer, oder eine Vielzahl von Aufheiz- und Abkühlzyklen) zwischen den beteiligten Komponenten, d.h. dem Wärmeleitkörper und dem mindestens einen PTC-Element vermieden werden; ferner wird durch die erfindungsgemäß vorgeschlagene Lösung die Korrosionsneigung durch eine Abdichtung erheblich reduziert, da kaum Spalte verbleiben, in welchen der sehr kriechfähige Betriebs-/Hilfsstoff in Form von Harnstoff bzw. einer Harnstoff-Wasser-Lösung eindringen könnte.

Aufgrund der Rückfederungseigenschaften des mindestens einen Ausgleichselementes kann die Vorspannung des Pressverbundes innerhalb der Tasche zur Aufnahme des PTC-Elementes aufrechterhalten bleiben. Es läßt sich eine Kompensation der thermischen Dehnungen des Pressverbundes aufgrund unterschiedlicher Wärmeausdehnung der verschiedenen beteiligten Materialien bzw. der verschiedenen beteiligten Kontaktpartner erreichen. Durch das erfindungsgemäß vorgeschlagene mindestens eine Ausgleichselement werden Brüche am PTC-Element bei Montage und im Betrieb verhindert oder zumindest minimiert. Falls jedoch ein PTC-Element an einer oder mehreren Stellen brechen sollte, so wird durch das Ausgleichselement eine Bewegung bzw. Wanderung der Bruchstücke behindert, oder, sofern nicht vollständig vermieden, so doch signifikant minimiert. Aufgrund des Rückfedervermögens wird ein Kontakt zwischen Ausgleichselement und den einzelnen PTC-Element-Bruchstücken sichergestellt, wodurch die elektrische und thermische Anbindung bzw. Funktion der Heizung sichergestellt bleibt.

Die Heizeinrichtung sämt Wärmeleitkörper und Heizelement kann zum Schutz vor aggresiven Umgebungsmedien, wie beispielsweise Flüssigkeiten Eis oder Gas usw. und/oder gegen Kurzschlüsse vollständig oder teilweise umspritzt oder beschichtet werden. Damit können auch Dichtungsgeometrien Befestigungsmöglichkeiten mit berücksichtigt werden. Es lassen sich mehrere Funktionalitäten miteinander kombinieren, ohne dass zusätzliche Bauteile bzw. zusätzliche Fertigungsschritte erforderlich werden.

### Kurze Beschreibung der Zeichnung

Anhand der Zeichnung wird die Erfindung nachstehend eingehender erläutert.
- Figur 1: zeigt in perspektivischer Ansicht einen Wärmeleitkörper, ohne Kunststoffumspritzung,
- Figur 2: zeigt in perspektivischer Darstellung einen teilweise geschnitten dargestellten Wärmeleitkörper mit integriertem PTC-Element, potentialseitige Stromschiene, ein Isolationselement und einem Ausgleichselement nach dem Verpressungsvorgang,
- Figur 3: die Anordnung des PTC-Elementes innerhalb einer Tasche im Wärmeleitkörper vor dem Verpressungsvorgang,
- Figur 4: die Bauteilkombination aus Isolationselement, potentialseitiger Stromschiene PTC-Element und Ausgleichselement im verpressten Zustand innerhalb des Wärmeleitkörpers und
- Figur 5: eine alternative Ausführungsmöglichkeit der erfindungsgemäß vorgeschlagenen Lösung, bei der das eingesetzte, mindestens eine PTC-Element an beiden Seiten von Ausgleichselementen flankiert und innerhalb einer Tasche innerhalb des Wärmeleitkörpers montiert ist.

### Ausführungsvarianten

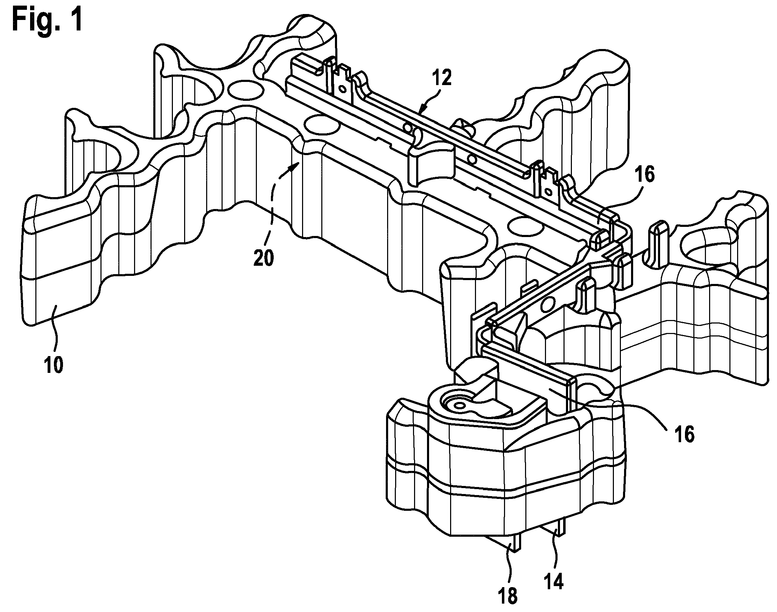

Figur 1 ist in perspektivischer Ansicht ein Wärmeleitkörper noch ohne Kunststoffumspritzung zu entnehmen.

Aus der perspektivischen Ansicht gemäß Figur 1 geht hervor, dass ein Wärmeleitkörper 10 eine elektrische Kontaktleiste 12 aufweist. Die potentialseitige elektrische Kontaktleiste 12 wird an der Unterseite des Wärmeleitkörpers 10 mittels eines potentialseitigen Anschlusses 14 sowie einer masseseitigen Stromschiene 18 elektrisch kontaktiert. Die masseseitige Stromschiene 18 ist oben in den Wärmeleitkörper 10 verpresst; in diesem Falle stellt der Wärmeleitkörper 10 eine masseseitige elektrische PTC-Element 20-Kontaktierung dar. In den Wärmeleitkörper 10 ist mindestens ein PTC-Element 20 eingebettet, das in Figur 1 vom Material des Wärmeleitkörpers 10 umschlossen und daher nicht dargestellt ist. Das PTC-Element 20 kann dabei verpresst sein oder auch mit einer Feder im Bauraum des Wärmeleitkörpers 10 verspannt bzw. vorgespannt sein. Die elektrische Kontaktleiste 12 ist wie in der perspektivischen Ansicht aus Figur 1 dargestellt, mit einer Kontaktleistenumspritzung 16 an der Oberseite des Wärmeleitkörpers 10 versehen. Ein unterer umspritzter Bereich der Kontaktleiste 12 ist durch den Wärmeleitkörper 10 verdeckt und daher in Figur 1 nicht dargestellt.

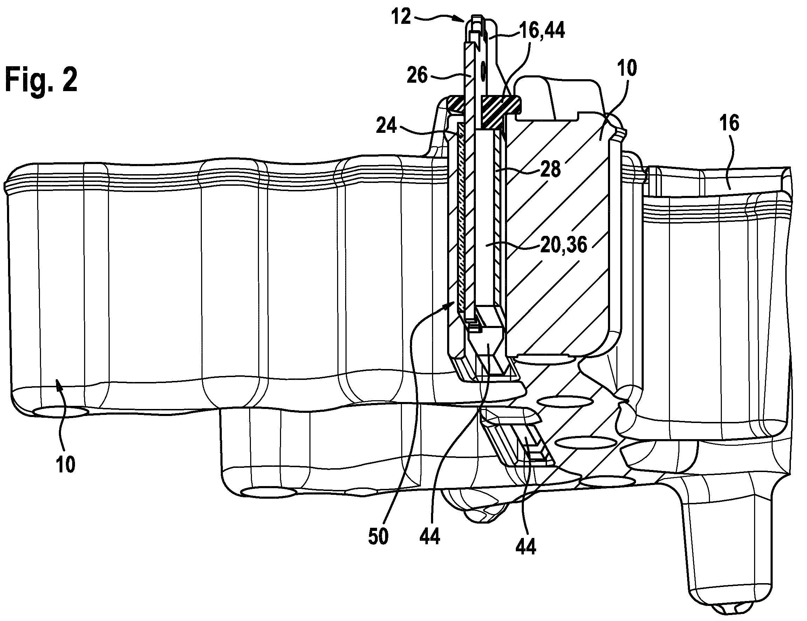

Figur 2 zeigt in perspektivischer Darstellung einen teilweise geschnitten dargestellten Wärmeleitkörper mit integriertem PTC-Element, potentialseitiger Stromschiene, mindestens einem Isolationselement und einem Ausgleichselement. Anstelle des PTC-Elementes 20 könnten auch beliebige andere wärmeerzeugende Elemente als Heizelemente 36 eingesetzt werden.

Aus der teilweise geschnittenen Darstellung gemäß Figur 2 geht hervor, dass in einer Tasche des Wärmeleitkörpers 10 über die elektrische potentialseitige Kontaktleiste 12 mindestens ein als PTC-Element 20 eingesetztes Heizelement 36 elektrisch kontaktiert wird. Dazu umfasst die elektrische Kontaktleiste 12 eine potentialseitige Stromschiene 26.
Aus der Darstellung gemäß Figur 2 geht hervor, dass eine Heizeinrichtung in der Tasche des Wärmeleitkörpers 10 montierten Zustand, beispielsweise ein flächig ausgebildetes Isolationselement 24, die sich ebenfalls in vertikaler Lage befindende potentialseitige Stromschiene 26, eben jenes mindestens eine PTC-Element 20 sowie mindestens ein erstes Ausgleichselement 28 umfasst. Die genannten Komponenten sind nach Art eines Sandwichaufbaus im Wesentlichen in vertikaler Einbaulage in der Einbautasche 50 des Wärmeleitkörpers 10 aufgenommen und liegen im Wesentlichen flächig aneinander an.

Die Komponenten Isolationselement 24, potentialseitige Stromschiene 26, das mindestens eine im Wesentlichen flächig ausgebildete PTC-Element 20 sowie das erste Ausgleichselement 28 werden in der Einbautasche 50 durch Verstemmen oder Verpressen befestigt. Dabei stellt sich ein im Wesentlichen flächiger Kontakt der genannten Komponenten miteinander ein. Es können bereits beim Montagevorgang erste Risse an dem Isolationselement 24 und auch dem mindestens einen als Heizelement eingesetzten PTC-Element 20 auftreten, wodurch eine leichte Verschlechterung der Heizleistung verursacht werden kann. Im Betrieb kann es zu einem weiteren Risswachstum aufgrund der bei der Montage aufgetretenen Vorschädigung oder durch Unebenheiten kommen.

Um diese negativen Effekte zu verhindern, oder zumindest deutlich zu reduzieren, ist mindestens ein Ausgleichselement 28 zwischen dem PTC-Element 20 und dem Wärmeleitkörper 10 verbaut. Alternativ kann das mindestens eine Ausgleichselement 28 zwischen beliebigen anderen Komponenten 10, 24, 26 und 20 in einer Einbautasche 50 angeordnet werden, wobei vorzugsweise der Einbau an einer Stelle mit schlechten Oberflächen der einanderen kontaktierenden Kontaktpartnern gewählt werden sollte. Bei Bedarf können auch mehrere Ausgleichselemente 28 eingebaut werden. Ohne Verwendung des mindestens einen Ausgleichselement 28 führen über die Lebensdauer gesehen, die bei der Montage aufgetretenen und die durch thermische Belastung entstandenen Risse zusammen mit einer nachlassenden Spannkraft aufgrund von Relaxationserscheinungen zu einer unzulässigen und nicht mehr akzeptablen Erhöhung des elektrischen Übergangswiderstandes und einer Verschlechterung der thermischen Ankopplung. So würde sich die Wärmeleitung von dem mindestens einen PTC-Element 20 zum Wärmeleitkörper 10 verschlechtern. Je nach Fertigungsgüte der im Wesentlichen flächig aneinander liegenden Komponenten, kann sich die Wärmeleitung 30 ohne Einsatz des mindestens einen Ausgleichselementes 28 auch durch Unebenheiten deutlich verschlechtern, da die Einzelteile aus Edelstahl, Keramik, Aluminiumlegierungen gefertigt werden, so dass Formtoleranzen fertigungsbedingt auftreten. So wird deren negativer Einfluss auf die Heizleistung durch Einsatz des mindestens einen erfindungsgemäß vorgeschlagenen Ausgleichselementes 28 ausgeglichen oder zumindest deutlich reduziert.

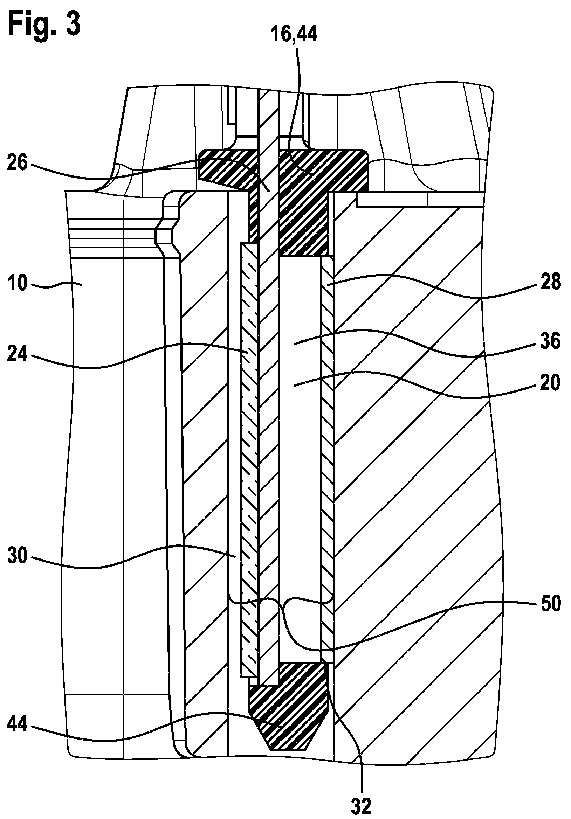

Figur 3 zeigt eine Anordnung des mindestens einen PTC-Elementes innerhalb einer Einbautasche im Wärmeleitkörper vor der Verpressung bzw. der Verstemmung in der Einbautasche.

Aus der Schnittdarstellung gemäß Figur 3 geht hervor, dass das mindestens eine als Heizelement eingesetzte PTC-Element 20 an seiner Oberseite 44 eine Kontaktleistenumspritzung 16 und einen um den Kontaktierungsbereich umlaufenden Rahmen 44 aufweist. In der Darstellung gemäß Figur 3 ist die obere Kontaktleistungumspritzung 16 mit dem umlaufendem Rahmen 44 im Kontaktierungsbereich verbunden, da in diesem Beispiel als Kunststoffumspritzung ausgebildet. Das mindestens eine zu Heizzwecken dienende PTC-Element 20 ist im Figur 3 dargestellten Zustand über die potentialseitige Stromschiene 26 elektrisch kontaktiert. Ferner ist das mindestens eine flächige Ausgleichselement 28 dargestellt sowie ein ebenfalls flächig ausgebildetes Isolationselement 24. Die Einbautasche 50 wird durch den Wärmeleitkörper 10 und den um den Kontaktierungsbereich umlaufenden Rahmen 44 begrenzt. Mit Bezugszeichen 30 ist ein spaltförmig ausgebildeter Montagefreiraum 30 bezeichnet, welcher das zum Einschieben in die Einbautasche 50 erforderliche Spiel für den Verbund aus dem mindestens einen ersten flächigen Ausgleichselement 28, dem PTC-Element 20 der potentialseitigem Stromschiene 26 und dem flächigen Isolationselement 24 erforderlich ist. Anstelle eines Verpressens oder Verstemmens im Montagefreiraum 30 kann das mindestens eine flächig ausgebildete Ausgleichselement 28 auch durch ein hier nicht dargestelltes Federelement beaufschlagt sein, wodurch bei entsprechender Auslegung der Federkraft Brüche im PTC-Element 20 verhindert werden können.

Durch das mindestens eine flächige Ausgleichselement 28 können unebene bzw. raue Oberflächen sowohl an einer elektrischen Kontaktfläche des mindestens einen PTC-Elementes 20 als auch an der Innenseite der Einbautasche 50, beispielsweise am zweiten Umspritzungsteil 48 ausgeglichen werden. Des Weiteren verhindert das mindestens eine flächige Ausgleichselement 28 das Abbrechen von Teilen des PTC-Elementes 20 bei der Montage durch Verpressen sowie während des Betriebes aufgrund thermisch induzierter Spannungen. Die elektrische Verbindung zwischen der mindestens einen als Heizelement dienenden PTC-Element 20 und dem Wärmeleitkörper 10 wird durch Versiegelung der elektrischen Kontaktfläche des PTC-Elementes 20 durch das mindestens eine flächige Ausgleichselement 28 deutlich robuster gegenüber Umgebungsgasen sowie anderen aggressiven ein Zersetzen oder Korrosion auslösenden Medien, zum Beispiel Kondensat.

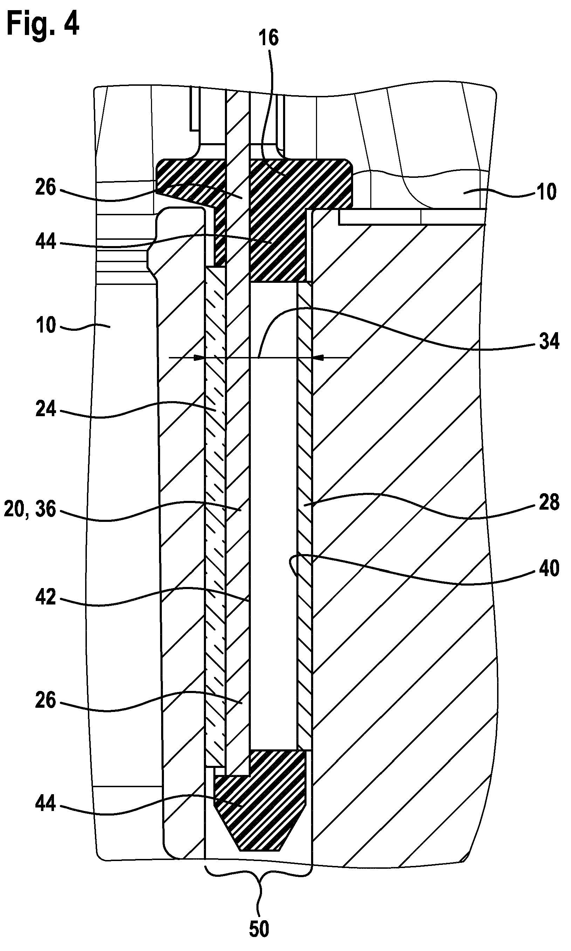

Der Darstellung gemäß Figur 4 ist eine Bauteilkombination aus dem flächigen Isolationselement, der Stromschiene und dem mindestens ein PTC-Element sowie dem mindestens ein flächigen Ausgleichselement im verpressten Zustand innerhalb der Einbautasche zu entnehmen.

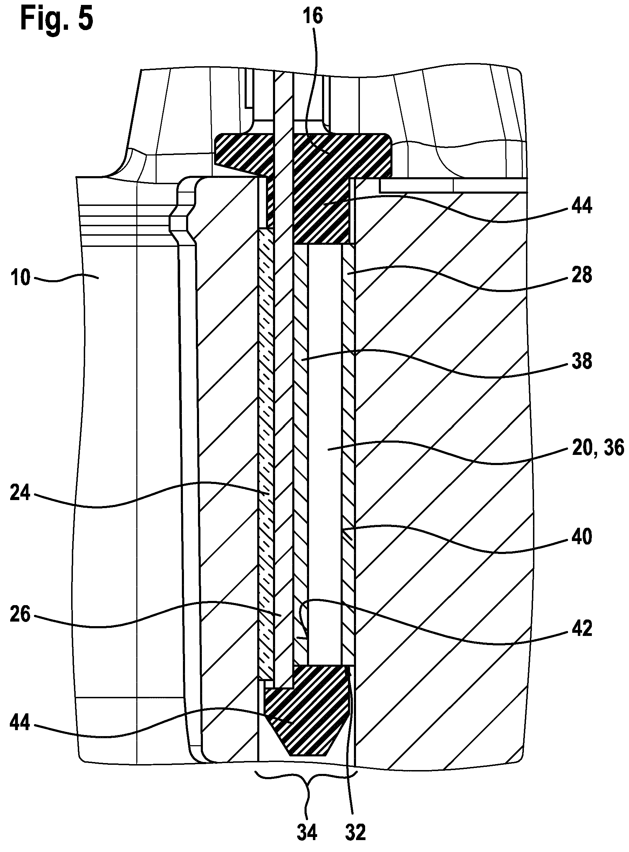

Wie Figur 4 zeigt, entsteht nach dem Verpressen bzw. Verstemmen des Bauteilverbundes aus Isolationselement 24, elektrischer, potentialseitiger Stromschiene 26, PTC-Element 20 sowie mindestens einem flächigen ersten Ausgleichselement 28 ein Sandwichaufbau, der im verpressten Zustand 34 gemäß der Darstellung in Figur 4 beidseits an den fertigungsbedingten Unebenheiten aufweisenden Teilen des Wärmeleitkörpers 10 der Einbautasche 50 anliegt. Das mindestens eine flächige Ausgleichselement 28 weist eine sehr gute Wärmeleitfähigkeit von > 0,5 W/mK, vorzugsweise über 5 W/mK auf. Das mindestens eine flächige Ausgleichselement 28 weist eine Dicke zwischen 0,05 mm und 0,25 mm auf, abhängig von den Abmessungen des PTC-Elementes 20 und der Fertigungsgüte des Wärmeleitkörpers 10 Dicken kleiner als 0,05 mm sehr vorteilhaft sind. Je nach Konfiguration von Kontaktflächen 40 bzw. 42, vergleiche auch Darstellung gemäß Figur 5, kann die Dicke des mindestens einen flächigen ersten Ausgleichselementes 28 auch kleiner oder größer sein. Das mindestens eine erste Ausgleichselement 28 zeichnet sich ferner durch eine flexible Verformbarkeit bei Druckbeaufschlagung aus und ist so deformierbar, dass es sich Unebenheiten anpasst bzw. diese verfüllt. Beispielsweise kann das mindestens eine erste Ausgleichselement 28 durch eine Graphitfolie oder eine Graphitschicht dargestellt werden. Des Weiteren besteht die Möglichkeit, das mindestens eine erste flächige Ausgleichselement 28 durch eine Wärmeleitpaste oder Nanoröhren aus Kohlenstoff darzustellen. Das mindestens ein Ausgleichselement 28 kann dabei auch als Beschichtung auf einem oder mehrerer der Komponenten 20, 36, 10, 26 und 24 dargestellt werden.

Durch das mindestens eine, d.h. erste flächige Ausgleichselement 28 werden Oberflächenfehler hinsichtlich der Rauigkeit, Ebenheit und Parallelität kompensiert. Dies bezieht sich sowohl auf die Rauigkeit bzw. auf Oberflächenfehler an der zweiten Kontaktfläche 42 zum Wärmeleitkörpers 10 der die Einbautasche 50 begrenzt, wie auch auf die Ausführung eines beispielsweise aus Keramikmaterial gefertigten und daher bruchgefährdeten PTC-Elementes 20 an der dem ersten flächigen Ausgleichselement 28 zuweisenden Kontaktfläche 40.

Der Darstellung gemäß Figur 4 ist zu entnehmen, dass die Kammerung des mindestens einen Ausgleichselementes 28 durch den um den Kontaktierungsbereich verlaufenden umspritzten Rahmen 44 an Ober- und Unterseite erzeugt wird. Diese Kammerung wird vorzugsweise umlaufend vorgesehen, wobei fertigungs- und toleranzbedingte Unterbrechungen sowie keine Spalte zugelassen werden, jeweils abhängig davon, ob das als Ausgleichselement 28 verwendete Material dies zulässt.

Aus der Darstellung gemäß Figur 5 geht eine alternative Ausführungsmöglichkeit der erfindungsgemäß vorgeschlagenen Lösung hervor, wonach das als Heizelement eingesetzte, mindestens eine PTC-Element an beiden Seiten von Ausgleichselementen flankiert und innerhalb der Einbautasche im Wärmeleitkörper verpresst bzw. verstemmt ist.

Figur 5 zeigt, dass der im Wesentlichen in einer vertikalen Einbaulage 32 im verpressten Zustand 34 in die Einbautasche 50 eingelassene Bauteilverbund einen sandwichartigen Aufbau aufweist. In der Einbautasche 50 sind das Isolationselement 24, die potentialseitige Stromschiene 26, die beiden flächigen Ausgleichselemente 28 und 38 sowie das von diesen flankierte mindestens eine PTC-Element 20 aufgenommen. Figur 5 zeigt, dass jeder elektrischen Kontaktfläche 40 bzw. 44 des als Heizelement eingesetzten PTC-Elementes 20 jeweils ein flächiges Ausgleichselement 28 bzw. 38 zugeordnet ist. Im verpressten Zustand 34 ist die komplette Heizeinrichtung dauerhaft unter Vorspannung gesetzt, so dass sich eine hervorragende elektrische Anbindung sowie eine hervorragende Wärmeanbindung zur Optimierung der Wärmeübertragung dienende Einbausituation einstellt. In der in Figur 5 dargestellten Ausführungsmöglichkeit der erfindungsgemäß vorgeschlagenen Lösung sind die hier eingesetzten beiden Ausgleichselemente 28 bzw. 38 den beiden elektrischen Kontaktflächen 40 bzw. 42 des PTC-Heizelementes 20 zugeordnet. Dadurch wird nicht nur die sich einstellende Wärmeübertragung erheblich verbessert und die Bruchgefahr an dem mindestens einen PTC-Element 20 minimiert. Durch diese Ausführungsmöglichkeit kann auch die elektrische Kontaktfläche erheblich vergrößert werden und diese besonders gut gegenüber in der Umgebung vorliegende aggressive Medien abgedichtet werden. Durch die Abdichtung bleiben die Eigenschaften der elektrischen Kontaktflächen 40 bzw. 42 des mindestens einen als Heizelement 36 eingesetzten PTC-Elementes 20 sowie deren elektrische Kontaktpartner dauerhaft innerhalb der Spezifikation, so dass sich die Lebensdauer des PCT-Elementes 20 erheblich verlängern lässt.

Alternativ kann die masseseitige Kontaktierung statt über den Wärmeleitkörper 10 beispielsweise direkt über die masseseitige Stromschiene 18 erfolgen.

Auch besteht die Möglichkeit, das mindestens eine flächige Isolationselement 24 selbst als Ausgleichselement auszulegen, oder ein weiteres Ausgleichselement 28 zwischen dem Isolationselement 24 und der potentialseitigen Stromschiene 26 anzuordnen. Außerdem kann ein Ausgleichselement 28 auch zwischen dem Isolationselement 24 und dem Wärmeleitkörper 10 der Einbautasche 50 angeordnet werden. Bei Ausführung des Isolationselementes 24 als Ausgleichselement ist zu beachten, dass die Auslegung entsprechend der Stromstärke als elektrisch nicht leitfähig ausgelegt wird. Des Weiteren sind auch bei dieser Ausführungsvariante hohe Anforderungen an die Ebenheit bzw. geringe Rauheit der aneinander liegenden Flächen zu richten.

Durch die erfindungsgemäß vorgeschlagene Lösung kann erreicht werden, dass die Bruchgefahr in den peripheren Bereichen des PTC-Heizelementes beim Montagevorgang, d.h. beim Verstemmen bzw. beim Verpressen der Einbautasche 50 erheblich herabgesetzt werden kann, so dass eine Vorschädigung dieses Bauteiles bei der Montage sogar ausgeschlossen, werden kann, wodurch die Gefahr eines Risswachstums während der Lebensdauer unter den ungünstigen Einflüssen aggressiver Medien wie Kondensaten und Gas nicht mehr besteht oder erheblich reduziert wird.

## Patentansprüche

1. Heizeinrichtung mit einem Wärmeleitkörper (10) und mit einem Heizelement (20, 36) zum Erwärmen oder Auftauen eines Betriebs-/Hilfsstoffes für eine Verbrennungskraftmaschine, wobei der Wärmeleitkörper (10) eine Einbautasche (50) aufweist, die mindestens ein elektrisch kontaktiertes Heizelement (20, 36) aufnimmt, das über mindestens eine Stromschiene (18, 26) kontaktiert ist, **dadurch gekennzeichnet, dass** das mindestens ein Heizelement (20, 36) über mindestens ein flächiges Ausgleichselement (28, 38) mit dem Wärmeleitkörper (10) und/oder der Stromschiene (18, 26) in Kontakt steht, wobei das mindestens ein Ausgleichselement (28, 38) mittels eines einen Kontaktierungsbereich umgebenden Rahmens (44) in der Einbautasche (50) befestigt ist, wodurch sich eine Rückfederwirkung in Betrieb einstellt, und wobei die Komponenten Stromschiene, Heizelement und Ausgleichselement in der Einbautasche durch Verstemmen oder Verpressen befestigt oder durch ein Federelement beaufschlagt werden, so dass sich ein im Wesentlichen flächiger Kontakt der genannten Komponenten miteinander einstellt.

2. Heizeinrichtung gemäß Anspruch 1, **dadurch gekennzeichnet, dass** das mindestens eine flächige Ausgleichselement (28, 38) als flexible Graphitfolie oder als Graphitbeschichtung ausgeführt ist.

3. Heizeinrichtung gemäß Anspruch 1, **dadurch gekennzeichnet, dass** das mindestens Ausgleichselement (28, 38) als Wärmeleitpaste, Kohlenstoffbeschichtung oder Nanopartikelbeschichtung ausgeführt ist.

4. Heizeinrichtung gemäß einem der vorhergehenden Ansprüche, **dadurch gekennzeichnet, dass** die Wärmeleitfähigkeit des mindestens einen Ausgleichselements (28, 38) _{>} 0,5 W/mK, insbesondere _{>} 5 W/mK liegt.

5. Heizeinrichtung gemäß einem der vorhergehenden Ansprüche, **dadurch gekennzeichnet, dass** die Dicke des mindestens einen flächigen Ausgleichselementes (28, 38) zwischen 0,01 mm und 0,5 mm liegt, insbesondere zwischen 0,05 mm und 0,25 mm.

6. Heizeinrichtung gemäß einem der vorhergehenden Ansprüche, **dadurch gekennzeichnet, dass** das Material des mindestens einen flächigen Ausgleichselementes (28, 38) flüssigkeitsdicht und/oder gasdicht ist.

7. Heizeinrichtung gemäß einem der vorhergehenden Ansprüche, **dadurch gekennzeichnet, dass** einer ersten elektrischen Kontaktfläche (40) und einer zweiten elektrischen Kontaktfläche (42) des Heizelementes (20, 36) jeweils ein flächiges Ausgleichselement (28, 38) zugeordnet ist.

8. Heizeinrichtung gemäß Anspruch 7, **dadurch gekennzeichnet, dass** das mindestens ein Ausgleichselement (28, 38) und/oder ein Isolationselement (24) die mindestens eine elektrische Kontaktfläche (40, 42) gegen eine aggressive Umgebung abdichtet.

9. Heizeinrichtung gemäß einem der vorhergehenden Ansprüche, **dadurch gekennzeichnet, dass** die Heizeinrichtung zumindest teilweise mit einer Umspritzung aus Kunststoffmaterial (46, 48) umgeben ist.

## Claims

1. Heating device having a heat conducting body (10) and having a heating element (20, 36) for heating or thawing an operating medium/additive for an internal combustion engine, the heat conducting body (10) having an installation pocket (50) which receives at least one electrically contacted heating element (20, 36) which is contacted via at least one conductor rail (18, 26), **characterized in that** the at least one heating element (20, 36) is in contact with the heat conducting body (10) and/or the conductor rail (18, 26) via at least one flat compensation element (28, 38), the at least one compensation element (28, 38) being fastened in the installation pocket (50) by means of a frame (44) which surrounds a contact region, as a result of which a spring-back effect is produced during operation, and the components conductor rail, heating element and compensation element being fastened in the installation pocket by way of caulking or pressing or being loaded by way of a spring element, with the result that a substantially flat contact of said components with one another is produced.

2. Heating device according to Claim 1, **characterized in that** the at least one flat compensation element (28, 38) is configured as a flexible graphite film or as a graphite coating.

3. Heating device according to Claim 1, **characterized in that** the at least one compensation element (28, 38) is configured as a heat-conducting paste, carbon coating or nanoparticle coating.

4. Heating device according to one of the preceding claims, **characterized in that** the thermal conductivity of the at least one compensation element (28, 38) lies at > 0.5 W/mK, in particular > 5 W/mK.

5. Heating device according to one of the preceding claims, **characterized in that** the thickness of the at least one flat compensation element (28, 38) lies between 0.01 mm and 0.5 mm, in particular between 0.05 mm and 0.25 mm.

6. Heating device according to one of the preceding claims, **characterized in that** the material of the at least one flat compensation element (28, 38) is liquid-tight and/or gas-tight.

7. Heating device according to one of the preceding claims, **characterized in that** a first electric contact face (40) and a second electric contact face (42) of the heating element (20, 36) are assigned in each case one flat compensation element (28, 38).

8. Heating device according to Claim 7, **characterized in that** the at least one compensation element (28, 38) and/or an insulation element (24) seal/seals the at least one electric contact face (40, 42) against an aggressive environment.

9. Heating device according to one of the preceding claims, **characterized in that** the heating device is surrounded at least partially by way of an injection-moulded encapsulation made from plastic material (46, 48).

## Revendications

1. Dispositif de chauffage comportant un corps thermiquement conducteur (10) et un élément chauffant (20, 36) destiné à chauffer ou décongeler un carburant/additif destiné à un moteur à combustion interne, dans lequel le corps thermiquement conducteur (10) comporte une poche de montage (50) qui reçoit l'au moins un élément chauffant (20, 36) avec lequel un contact électrique est établi par l'intermédiaire d'au moins une barre conductrice (18, 26), **caractérisé en ce que** l'au moins un élément chauffant (20, 36) est en contact par l'intermédiaire d'au moins un élément de compensation plan (28, 38) avec le corps thermiquement conducteur (10) et/ou avec la barre conductrice (18, 26), dans lequel l'au moins un élément de compensation (28, 38) est fixé dans la poche de montage (50) au moyen d'un châssis (44) entourant une zone de contact, d'où il résulte qu'il se produit lors du fonctionnement un effet de force de rappel, et dans lequel les composants, à savoir la barre conductrice, l'élément chauffant et l'élément de compensation, sont fixés dans la poche de montage par calfatage ou compression ou sont sollicités par un élément à ressort de manière à ce qu'il se produise un contact sensiblement plan entre lesdits composants.

2. Dispositif de chauffage selon la revendication 1, **caractérisé en ce que** l'au moins un élément de compensation plan (28, 38) est réalisé sous la forme d'une feuille de graphite souple ou d'un revêtement de graphite.

3. Dispositif de chauffage selon la revendication 1, **caractérisé en ce que** l'au moins un élément de compensation (28, 38) est réalisé sous la forme d'une pâte thermiquement conductrice, d'un revêtement de carbone ou d'un revêtement de nanoparticules.

4. Dispositif de chauffage selon l'une quelconque des revendications précédentes, **caractérisé en ce que** la conductivité thermique de l'au moins un élément e compensation (28, 38) est supérieure à 0,5 W/mK, et plus particulièrement, est supérieure à 5 W/mK.

5. Dispositif de chauffage selon l'une quelconque des revendications précédentes, **caractérisé en ce que** l'épaisseur de l'au moins un élément de compensation plan (28, 38) se situe entre 0,01 mm et 0,5 mm, et plus particulièrement, entre 0,05 mm et 0,25 mm.

6. Dispositif de chauffage selon l'une quelconque des revendications précédentes, **caractérisé en ce que** le matériau de l'au moins un élément de compensation plan (28, 38) est étanche aux liquides et/ou étanche aux gaz.

7. Dispositif de chauffage selon l'une quelconque des revendications précédentes, **caractérisé en ce qu'**un élément de compensation plan (28, 38) est respectivement associé à une première surface de contact électrique (40) et à une seconde surface de contact électrique (42) de l'élément chauffant (20, 36).

8. Dispositif de chauffage selon la revendication 7, **caractérisé en ce que** l'au moins un élément de compensation (28, 38) et/ou un élément d'isolation (24) rend étanche l'au moins une surface de contact électrique (40, 42) vis-à-vis d'un environnement agressif.

9. Dispositif de chauffage selon l'une quelconque des revendications précédentes, **caractérisé en ce que** le dispositif de chauffage est au moins partiellement entouré d'un surmoulage constitué de matière plastique (46, 48).
